Europäisches Patentamt

European Patent Office

Office européen des brevets

(11) Veröffentlichungsnummer: **0 265 013 B1**

(12) **EUROPÄISCHE PATENTSCHRIFT**

(45) Veröffentlichungstag der Patentschrift: **27.05.92**

(21) Anmeldenummer: **87201974.0**

(22) Anmeldetag: **14.10.87**

(51) Int. Cl.⁵: **C01G 23/00**

(54) Verfahren zur Herstellung von Bariumtitanat BaTi03.

(30) Priorität: **18.10.86 DE 3635532**

(43) Veröffentlichungstag der Anmeldung:
**27.04.88 Patentblatt 88/17**

(45) Bekanntmachung des Hinweises auf die Patenterteilung:
**27.05.92 Patentblatt 92/22**

(84) Benannte Vertragsstaaten:
**DE ES FR GB NL**

(56) Entgegenhaltungen:
**BE-A- 528 098**
**DE-B- 1 014 972**
**FR-A- 2 570 373**
**US-A- 2 758 911**

**CHEMICAL ABSTRACTS, Band 68, Nr. 2, 8. Januar 1968, Seite 838, Zusammenfassung Nr. 8826y, Columbus, Ohio, US; Y.N. ORLYANSKII: "Precipitation and aging of barium titanyl oxalate in mother liquor", & ISV. VYSSK. UCHEB. ZAVED., KHIM. KHIM. TEKHNOL. 10(5), 500-3(1967)**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**ES FR GB NL**

(72) Erfinder: **Hennings, Detlev, Dr.**
**Hangstrasse 28**
**W-5100 Aachen(DE)**
Erfinder: **Schreinemacher, Herbert, Dipl.-Ing.**
**Sittarder Strasse 53**
**W-5100 Aachen(DE)**

(74) Vertreter: **Kupfermann, Fritz-Joachim, Dipl.-Ing. et al**
**Philips Patentverwaltung GmbH Wendenstrasse 35 Postfach 10 51 49**
**W-2000 Hamburg 1(DE)**

Rank Xerox (UK) Business Services

MATERIALS LETTERS, Band 3, Nr. 5-6, April 1985, Seiten 195-199, Elsevier Science Publishers B.V., Amsterdam, NL; T.R.N. KUTTY et al.: "EPR study on the role of Mn in enhancing PTC of BaTiO3"

## Beschreibung

Die Erfindung bezieht sich auf ein Verfahren zur Herstellung von Bariumtitanat $BaTiO_3$ durch thermische Zersetzung von Bariumtitanyloxalat $BaTiO(C_2O_4)_2 . 4 H_2O$ (BTO). Es ist bekannt, daß Bariumtitanat $BaTiO_3$ nicht nur durch Calcinieren der Rohstoffe $BaCO_3$ und $TiO_2$ sondern auch durch thermische Zersetzung von metallorganischen Komplexsalzen wie Bariumtitanyloxalat (BTO) oder Bariumtitanylcitrat hergestellt werden kann.

Nach einem aus J. Res. Natl. Bur. Stand. (1965), Res. Paper No. 2677, Seiten 289 bis 291 bekannten Verfahren läßt sich Bariumtitanyloxalat $BaTiO(C_2O_4)_2 . 4H_2O$ aus wässerigen Lösungen von Titantetrachlorid $TiCl_4$, Bariumchlorid $BaCl_2$ und Oxalsäure $H_2C_2O_4$ ausfällen.

Bei dem bekannten Prozeß wird die wässerige Lösung von $TiCl_4$ und $BaCl_2$ in eine wässerige Lösung von $H_2C_2O_4$ einer Temperatur von $\approx 80$ °C unter intensivem Rühren eingetropft. Um ein stöchiometrisch gut definiertes Endprodukt der Zusammensetzung $BaTiO(C_2O_4)_2 . 4H_2O$ zu erhalten, muß bei den eingesetzten Mengen ein Barium-Überschuß von $\approx 1$ Mol % und ein Oxalsäure-Überschuß von $\approx 10$ Mol %, beide Überschüsse bezogen auf die molare Menge des Titans, eingestellt werden.

Der Niederschlag fällt dann in einer typisch grobkristallinen Form mit Partikelgrößen im Bereich von $\approx 15$ bis 70 $\mu$m aus. Das Barium/Titan-Verhältnis der nach dem bekannten Verfahren hergestellten Pulver beträgt bei Beachtung der angegebenen Vorschriften 1 : 1 bis 1 : 1,01.

Wird das Bariumtitanyloxalat in oxidierender Atmosphäre, z.B. an Luft, bei einer Temperatur von 1000 °C calciniert, ergeben sich grobkörnige Aggregate aus $BaTiO_3$ einer Korngröße von 10 bis 50 $\mu$m. Die Primärpartikel aus $BaTiO_3$, aus denen die Aggregate bestehen, zeigen eine Korngrößenverteilung im Bereich von 0,3 bis 1,5 $\mu$m. Bei höheren Calcinierungstemperaturen zeigt sich ein starkes Kornwachstum der Primärpartikel.

Es ist bekannt, daß Form und Größe der Aggregate für die Mahlbarkeit und Form und Größe der Primärpartikel für die Sinterfähigkeit und chemische Reaktivität mit Additiven jeder Art von ausschlaggebender Bedeutung sind.

Aus US-PS 2 758 911 war ein Verfahren zur Herstellung von Bariumtitanat durch thermische Zersetzung von Barium/Titan-Oxalat bekannt, wobei zur Herstellung von Barium/Titan-Oxalat zunächst Titantetrachlorid und Oxalsäure und anschließend das gebildete Titanoxalat mit Bariumchlorid bei einer Temperatur von 65 °C zur Reaktion gebracht werden.

Nachteilig bei diesem Verfahren ist, daß im Reaktionsschritt zwischen Titantetrachlorid und Oxalsäure relativ hohe Temperaturen entstehen, die die Reaktion unkontrolliert ablaufen lassen und daß darüberhinaus Salzsäure freigesetzt wird, was umweltschutzbedingte Maßnahmen erforderlich macht. Ein weiterer Nachteil ist, daß im Reaktionsschritt zwischen Titanoxalat und Bariumchlorid bei einer Prozeßtemperatur von 65 °C gearbeitet werden soll, die hinsichtlich eines gewünschten stabilen Barium/Titan-Verhältnisses zu hoch ist.

Der Erfindung liegt die Aufgabe zugrunde, $BaTiO_3$-Pulver zu schaffen, die gegenüber den bekannten $BaTiO_3$-Pulvern ein engeres Sinterintervall und damit eine verbesserte Sinterfähigkeit aufweisen, die eine verbesserte Reaktivität zeigen mit Zusätzen, wie sie keramischen Massen auf Basis von $BaTiO_3$ zum Erreichen von gewünschten technischen Eigenschaften des Sinterproduktes gegeben werden und die sich leichter zur Einstellung einer gewünschten Korngröße und Korngrößenverteilung aufmahlen lassen.

Diese Aufgabe wird erfindungsgemäß dadurch gelöst, daß zur Bildung von Bariumtitanyloxalat $BaTiO(C_2O_4)_2 . 4H_2O$ eine wässerige Lösung von Bariumchlorid $BaCl_2$ in ein wässeriges Lösungsgemisch von Oxalsäure $H_2C_2O_4$ und Titanoxychlorid $TiOCl_2$ bei einer Temperatur im Bereich von 20 bis 60 °C unter starkem Rühren eingetropft und der Niederschlag bei einer Temperatur im Bereich von 900 bis 1300 °C calciniert wird.

Das eingesetzte wässerige Lösungsgemisch von Oxalsäure $H_2C_2O_4$ und Titanoxychlorid $TiOCl_2$ hat eine Temperatur im Bereich von 20 bis 60 °C, vorzugsweise von 55 °C. Bei Temperaturen oberhalb von 60 °C erweisen sich wässerige Lösungsgemische von Oxalsäure und Titanoxychlorid nur über kurze Zeit stabil (bei einer Temperatur von 80 °C weniger als 30 min). Höhere Temperaturen als 60 °C müssen daher vermieden werden, da es sonst zu unerwünscht hohen Ausfällungen von $TiO_2$ in der Vorlage kommt. Zu niedrige Temperaturen führen andererseits zu einer starken Verlangsamung des Fällungsprozesses. Die günstigste Fällungstemperatur liegt daher im Bereich von 50 bis 60 °C mit einem Optimum bei 55 °C.

Nach den vorteilhaften Ausgestaltungen des Verfahrens nach der Erfindung sind die Verfahrensparameter (Konzentration der Ausgangslösungen und Temperatur) so eingestellt, daß das Barium:Titan-Verhältnis des ausgefällten Barium-Titanyloxalats $BaTiO(C_2O_4)_2 . 4H_2O$ reproduzierbar im Bereich von 1 : 1,015 bis 1 : 1,025 liegt. $BaTiO_3$ mit einem derartigen Ba/Ti-Verhältnis wird vorteilhafterweise eingesetzt zur Herstellung von Widerständen mit einem positiven Temperaturkoeffizienten des Widerstandes, die bekanntlich mit einem Titan-Überschuß in dieser Größe zwecks Herstellung geringer Mengen einer Titan-angereicherten

EP 0 265 013 B1

flüssigen Phase gesintert werden.

Die mit dem Verfahren gemäß der Erfindung erzielbaren Vorteile liegen insbesondere in folgenden Fakten:

Die nach dem erfindungsgemäßen Verfahren hergestellten Kristallite aus Barium-Titanyloxalat zeigen im Gegensatz zu den nach dem bekannten Verfahren hergestellten Kristalliten nur noch Größen im Bereich von 0,5 bis 1 $\mu$m. Sehr häufig kommt es beim Absetzen dieser Kristallite zu einer Zusammenlagerung, also zu einer Ausbildung von Agglomeraten, diese Agglomerate zeigen aber auch eine gegenüber den Größen der nach dem bekannten Verfahren hergestellten Agglomerate eine verringerte Größe, typischerweise im Bereich von 5 $\mu$m bis 15 $\mu$m.

Wird das nach dem erfindungsgemäßen Verfahren hergestellte Bariumtitanyloxalat bei einer Temperatur von $\approx$ 1000 °C über eine Dauer von 4 Stunden calciniert, ergeben sich viel kleinere $BaTiO_3$-Aggregate (Korngröße im Bereich von 3 $\mu$m bis 10 $\mu$m) mit viel kleineren $BaTiO_3$-Primärpartikeln (Korngröße im Bereich von 0,1 $\mu$m bis 0,4 m), als sie nach dem bekannten Verfahren erhalten werden. Im Gegensatz zu den nach dem bekannten Verfahren hergestellten $BaTiO_3$-Pulvern zeigt sich bei den nach dem erfindungs-gemäßen Verfahren hergestellten $BaTiO_3$-Pulvern auch nur ein sehr geringes Kornwachstum mit der Temperatur. Wird das nach dem bekannten Verfahren hergestellte Bariumtitanyloxalat z.B. bei einer Temperatur von 1100 °C und über eine Dauer von 4 Stunden calciniert, ergeben sich $BaTiO_3$-Primärparti-kel einer Korngröße im Bereich von 0,5 $\mu$m bis 2,5 $\mu$m, wogegen sich nach dem erfindungsgemäßen Verfahren unter gleichen Calcinierungsbedingungen $BaTiO_3$-Primärpartikel einer Korngröße im Bereich von nur 0,2 $\mu$m bis 0,5 $\mu$m ergeben.

Die Mahlbarkeit der nach dem erfindungsgemäßen Verfahren hergestellten $BaTiO_3$-Pulver ist deutlich verbessert gegenüber der Mahlbarkeit der nach dem bekannten Verfahren hergestellten $BaTiO_3$-Pulver. Nach einem Aufmahlen über eine Dauer von 30 min mit einem Attritor unter den Bedingungen, wie sie unter Punkt 6 des Ausführungsbeispiels weiter unten beschrieben sind, ergibt sich für die nach dem bekannten Verfahren hergestellten $BaTiO_3$-Pulver eine mittlere Korngröße von $d_{50\%}$ = 1,1 $\mu$m und bei den nach dem erfindungsgemäßen Verfahren hergestellten Pulvern eine mittlere Korngröße von $d_{50\%}$ = 0,7 $\mu$m.

Die Ermittlung der Korngrößen kann z.B. in einer wässerigen Suspension mit 0,1 Gew.% $Na_2P_2O_7$ . 10 $H_2O$ in einem Sedigraphen erfolgen.

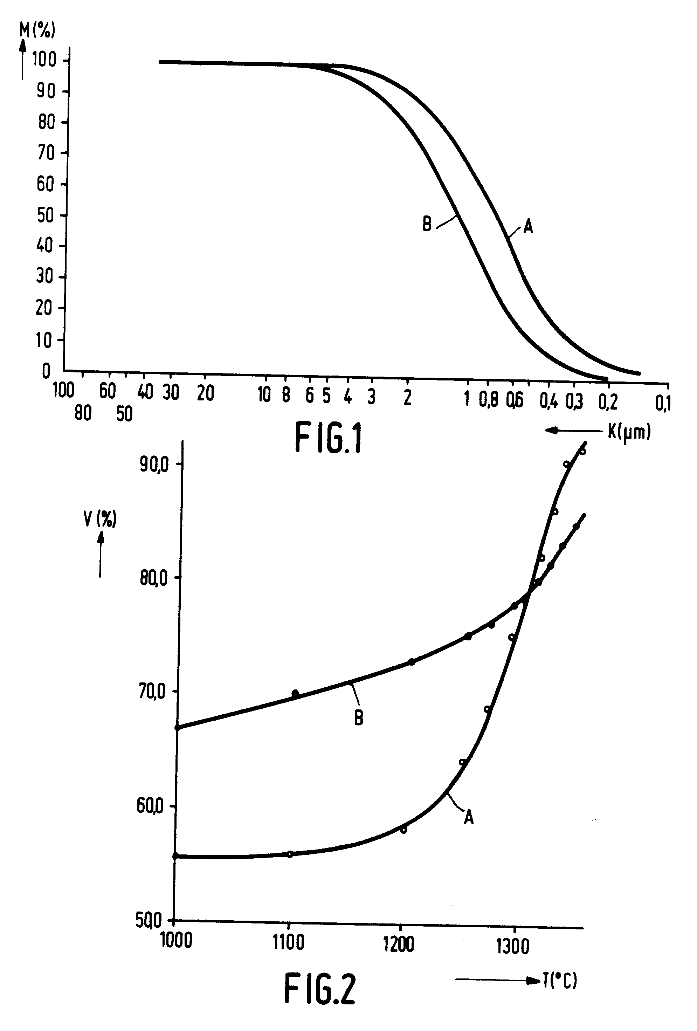

Die kumulativen Massenanteile $\mu$m bezogen auf die Korngröße K der nach dem erfindungsgemäßen Verfahren hergestellten $BaTiO_3$-Pulver (Kurve A) im Vergleich zu den nach dem bekannten Verfahren hergestellten Pulvern (Kurve B) ist in Fig. 1 dargestellt.

Die nach dem erfindungsgemäßen Verfahren hergestellten $BaTiO_3$-Pulver zeigen im Vergleich zu den nach dem bekannten Verfahren hergestellten $BaTiO_3$-Pulvern eine verbesserte Sinterfähigkeit. Dies zeigt sich am Schwindungsverhalten von Preßlingen, die aus unvermahlenen $BaTiO_3$-Pulvern hergestellt wurden. Die Schwindungskurven zeigen, daß Preßlinge aus Pulvern, die nach dem erfindungsgemäßen Verfahren hergestellt wurden, ein sehr viel engeres Sinterintervall aufweisen als Preßlinge, die nach dem bekannten Verfahren hergestellt und unter gleichen Bedingungen wie nach dem erfindungsgemäßen Verfahren hergestellte Preßlinge gesintert wurden. So beginnen aus nach dem erfindungsgemäßen Verfahren hergestelltem $BaTiO_3$ geformte Preßlinge aus ungemahlenen $BaTiO_3$-Pulvern erst ab 1200 °C zu schwinden und erreichen bei Temperaturen ab 1300 °C eine höhere Dichte (Kurve A), als aus nach dem bekannten Verfahren hergestelltem $BaTiO_3$ geformte Preßlinge (Kurve B). Hierzu wird auf Figur 2 verwiesen; wo die Verdichtung V in Prozent der theoretischen Dichte angegeben ist.

Die höhere Sinteraktivität und die größere spezifische Oberfläche der nach dem erfindungsgemäßen Verfahren hergestellten Pulver läßt auch eine höhere chemische Reaktivität dieser Pulver mit Additiven erwarten. Ein Vergleich der Pulver, die nach dem erfindungsgemäßen Verfahren und nach dem bekannten Verfahren hergestellt wurden zeigt die nachfolgende Tabelle:

4

Tabelle

BaTiO$_3$-Pulver, hergestellt nach den Verfahren:

| | (1) gemäß Stand der Technik | (2) gemäß Erfindung |
|---|---|---|
| Ba/Ti-Verhältnis | 1:1 bis 1:1,01 | 1:1,015 bis 1:1,025 |
| BTO-Kristallitgröße | 15 bis 70 /um | 0,5 bis 1 /um |
| BTO-Agglomeratgröße | ./. | 5 bis 15 /um |
| BaTiO$_3$-Primärpartikel-Größe (bei 1000 $^{\circ}$C calciniert) | 0,3 bis 1,5 /um | 0,1 bis 0,4 /um |
| BaTiO$_3$-Aggregat-Größe (bei 1000 $^{\circ}$C calciniert) | 10 bis 50 /um | 3 bis 10 /um |
| BaTiO$_3$-Primärpartikel-Größe (bei 1100 $^{\circ}$C calciniert) | 0,5 bis 2,5 /um | 0,2 bis 0,5 /um |
| Spezifische Oberfläche | | |
| bei 1000$^{\circ}$C calciniert: | 0,9 m$^2$/g | 1,8 m$^2$/g |
| bei 1100$^{\circ}$C calciniert: | 0,3 m$^2$/g | 1,7 m$^2$/g |
| 2h Attritor, 1000$^{\circ}$C calc.: | 6,5 m$^2$/g | 8,9 m$^2$/g |
| Mittlere Teilchengröße: ($d_{50}$-Wert im Sedigramm) | | |
| 2h Attritor, 1100 $^{\circ}$C calc.: | 0,8 /um | 0,54 /um |
| Verdichtung bei 1340 $^{\circ}$C: (Aufheizung 2.5 $^{\circ}$C/min) | | |
| Grünling vorgepreßt (3200 bar) | 85% | 92% |

Als Ausführungsbeispiel wird die Herstellung von BaTiO$_3$-Pulvern beschrieben:

1. Ausgangsmaterialien.

Zur Herstellung von Bariumtitanyloxalat (BTO) wurden handelsübliche Reagenzien (Reinheitsgrad "p.A.") verwendet:
TiOCl$_2$ mit 0,668 Mol Ti in wässeriger Lösung

BaCl$_2$ . 2H$_2$O
H$_2$C$_2$O$_4$ . 2H$_2$O

deminieralisiertes Wasser.

2. Herstellung der Ausgangslösungen.

TiOCl$_2$-Lösung:

400 ml TiCl$_4$ werden unter Rühren und bei einem Temperaturintervall von 5 bis 30 °C tropfenweise in 600 ml Wasser gegeben. Anschließend wurde auf 2000 ml verdünnt.

BaCl$_2$-Lösung:

Die Lösung wurde mit 1% Ba-Überschuß relativ zum Ti-Anteil (0,668 Mol pro Ansatz) hergestellt. 1,01 . 0,668 Mol BaCl$_2$ . 2H$_2$O = 164,81 g BaCl$_2$ . 2H$_2$O werden in 1600 ml Wasser gelöst.

H$_2$C$_2$O$_4$-Lösung:

Die Lösung wurde mit 10 Mol % Oxalsäureüberschuß relativ zum Ti-Gehalt hergestellt. 1,1 . 2nTi = 1,1 . 2 . 0,668 Mol = 185,27 g Oxalsäure H$_2$C$_2$O$_4$ . 2H$_2$O werden in 1000 ml Wasser bei einer Temperatur von 55 °C gelöst.

Mischen der Lösungen:

Die 0,668 Mol Ti enthaltende Menge TiOCl$_2$-Lösung wird in die H$_2$C$_2$O$_4$-Lösung unter Rühren eingebracht.

3. Ausfällen des Bariumtitanyloxalats.

Die wie unter Punkt 2 angegeben hergestellte Menge an BaCl$_2$-Lösung wird tropfenweise unter intensivem Rühren bei einer Temperatur von 55 °C in das wässerige Lösungsgemisch von TiOCl$_2$ und H$_2$C$_2$O$_4$ eingebracht.
Während des Zutropfens bildet sich nach kurzer Zeit ein feinkristalliner Niederschlag aus Bariumtitanyloxalat BaTiO(C$_2$O$_4$)$_2$ . 4H$_2$O mit einem geringen Überschuß an TiO$_2$ (1,5 - 2,5 Mol %), der abfiltriert wird und aus dem restliche Cl-Ionen durch mehrmaliges Auswaschen mit demineralisiertem Wasser entfernt werden.

4. Trocknen des Bariumtitanyloxalats.

Der Bariumtitanyloxalatniederschlag gemäß Punkt 3 wird an Luft über eine Dauer von 20 Stunden bei einer Temperatur von 50 °C getrocknet.

5. Calcinieren des Bariumtitanyloxalats.

Das Bariumtitanyloxalat gemäß Punkt 4 wird in einem Kammerofen in einem Luftstrom bei einer Temperatur zwischen 1000 °C und 1200 °C calciniert, vorzugsweise bei einer Temperatur von 1100 °C. Es entsteht ein weißes Pulver aus BaTiO$_3$ der oben beschriebenen Morphologie.

6. Aufmahlen des Bariumtitanats BaTiO$_3$.

60 g Bariumtitanat BaTiO$_3$ werden aufgeschlämmt in 130 ml Wasser und mit 0,6 g Ammoniumoxalat (NH$_4$)$_2$C$_2$O$_4$ . 1H$_2$O versetzt, um zu vermeiden, daß Ba-Ionen beim Mahlen ausgewaschen werden. Dieser Suspension werden 600 g Korund-Mahlkugeln eines Durchmessers von etwa 1,5 mm zugegeben. Die Suspension wird in einem handelsüblichen Attritor mit einer Geschwindigkeit von 500 U/min über eine Dauer von vorzugsweise 45 min aufgemahlen. Nach dem Aufmahlen wird die Suspension getrocknet und überschüssiges Ammoniumoxalat wird bei einer Temperatur von etwa 400 °C ausgeheizt.

**Patentansprüche**

**1.** Verfahren zur Herstellung von Bariumtitanat BaTiO$_3$ durch thermische Zersetzung von Bariumtitanyloxalat BaTiO(C$_2$O$_4$)$_2$ . 4H$_2$O, dadurch gekennzeichnet,
daß zur Bildung von Bariumtitanyloxalat BaTiO(C$_2$O$_4$)$_2$ . 4H$_2$O eine wässerige Lösung von Bariumchlorid BaCl$_2$ unter starkem Rühren in ein wässeriges Lösungsgemisch von Oxalsäure H$_2$C$_2$O$_4$ und Titanoxychlorid TiOCl$_2$ bei einer Temperatur im Bereich von 20 bis 60 °C eingetropft und der Niederschlag bei einer Temperatur im Bereich von 900 bis 1300 °C calciniert wird.

**2.** Verfahren nach Anspruch 1, dadurch gekennzeichnet,
daß eine 0,668 Mol Ti enthaltende Titanoxychlorid $TiOCl_2$-Lösung eingesetzt wird, die hergestellt wird durch unter Rühren tropfenweise Zugabe von 400 ml $TiCl_4$ bei einer Temperatur von $\leq$ 30 °C zu 600 ml Wasser, wonach die Lösung auf 2000 ml mit Wasser verdünnt wird.

**3.** Verfahren nach Anspruch 1, dadurch gekennzeichnet,
daß Oxalsäure $H_2C_2O_4$ . $2HO$ in einer Menge von 185,27 g in 1000 ml $H_2O$ einer Temperatur von 55 °C gelöst wird.

**4.** Verfahren nach Anspruch 1, dadurch gekennzeichnet,
daß Bariumchlorid $BaCl_2$ . $2H_2O$ in einer Menge von 164,81 g in 1600 ml $H_2O$ gelöst wird.

**5.** Verfahren nach den Ansprüchen 2 und 3, dadurch gekennzeichnet,
daß die Titanoxychlorid $TiOCl_2$-Lösung unter Rühren in die Oxalsäure $H_2C_2O_4$-Lösung eingebracht wird.

**6.** Verfahren nach den Ansprüchen 4 und 5, dadurch gekennzeichnet,
daß die Bariumchlorid $BaCl_2$-Lösung tropfenweise unter intensivem Rühren in das wässerige Lösungsgemisch von Titanoxychlorid $TiOCl_2$ und Oxalsäure $H_2C_2O_4$ bei einer Temperatur von 55 °C eingebracht wird, wobei ein Bariumtitanyloxalat-Niederschlag mit einem $TiO_2$-Überschuß im Bereich von 1,5 bis 2,5 Mol% ausfällt.

**7.** Verfahren nach Anspruch 6, dadurch gekennzeichnet,
daß der Bariumtitanyloxalat-Niederschlag nach Auswaschen restlicher Cl-Ionen zum Erhalten eines Pulvers über eine Dauer von 20 Stunden bei einer Temperatur von 50 °C an Luft getrocknet wird.

**8.** Verfahren nach Anspruch 7, dadurch gekennzeichnet,
daß das Bariumtitanyloxalat-Pulver in einem Kammerofen bei einer Temperatur im Bereich von 1000 bis 1200 °C, vorzugsweise bei einer Temperatur von 1100 °C, in oxidierender Atmosphäre zur Bildung von Bariumtitanat $BaTiO_3$ thermisch zersetzt wird.

**9.** Verwendung des nach dem Verfahren gemäß den Ansprüchen 1 bis 8 hergestellten Bariumtitanats $BaTiO_3$ für die Herstellung von passiven elektronischen Bauelementen, insbesondere von Widerständen mit einem positiven Temperaturkoeffizienten des Widerstandes.

**Claims**

**1.** A method of manufacturing barium titanate $BaTiO_3$ by pyrolysis of barium titanyl oxalate $BaTiO(C_2O_4)_2$ . $4H_2O$, characterized in that to form barium titanyl oxalate $BaTiO(C_2O_4)_2$ . $4H_2O$, an aqueous solution of barium chloride $BaCl_2$ is added dropwise to an aqueous solution comprising a mixture of oxalic acid $H_2C_2O_4$ and titanium oxychloride $TiOCl_2$ at a temperature in the range from 20 to 60°C, while stirring vigorously, and the precipitate is calcined at a temperature in the range from 900 to 1300°C.

**2.** A method as claimed in Claim 1, characterized in that a titanium oxychloride $TiOCl_2$ solution containing 0.668 mol of Ti is used, which is manufactured by dropwise adding 400 ml of $TiCl_4$ to 600 ml of water at a temperature of $\leq$30°C, while stirring, after which the solution is diluted with water to 2000 ml.

**3.** A method as claimed in Claim 1, characterized in that 185.27 g of oxalic acid $H_2C_2O_4$ . 2 $H_2O$ are dissovled in 1000 ml of $H_2O$ having a temperature of 55°C.

**4.** A method as claimed in Claim 1, characterized in that 164.81 g of barium chloride $BaCl_2$ . $2H_2O$ are dissolved in 1600 ml of $H_2O$.

**5.** A method as claimed in Claims 2 and 3, characterized in that the titanium oxychloride $TiOCl_2$ solution is added to the oxalic acid $H_2C_2O_4$ solution, while stirring.

**6.** A method as claimed in Claims 4 and 5, characterized in that the barium chloride $BaCl_2$ solution is added dropwise to the aqueous solution comprising a mixture of titanium oxychloride $TiOCl_2$ and oxalic

acid $H_2C_2O_4$ at a temperature of 55°C, while stirring vigorously, a barium titanyl oxylate precipitate having a $TiO_2$ excess in the range from 1.5 to 2.5 mol.% being formed.

7. A method as claimed in Claim 6, characterized in that to obtain a powder the barium titanyl oxalate precipitate is dried in air for 20 hours at a temperature of 50 °C after the residual Cl ions have been washed out.

8. A method as claimed in Claim 7, characterized in that the barium titanyl oxalate powder is pyrolysed in a chamber furnace at a temperature in the range from 1000 to 1200°C, preferably 1100°C, in an oxidising atmosphere to form barium titanate $BaTiO_3$.

9. The use of the barium titanate $BaTiO_3$, manufactured according to the method as claimed in Claims 1 to 8, for the manufacture of passive electronic components, in particular resistors having a positive temperature coefficient of resistance.

**Revendications**

1. Procédé de préparation de titanate de baryum $BaTiO_3$ par décomposition thermique de titanyloxalate de baryum $BaTiO(C_2O_4)_2.4H_2O$, caractérisé en ce que pour former le titanyloxalate de baryum $BaTiO(C_2O_4)_2.4H_2O$, une solution aqueuse de chlorure de baryum $BaCl_2$ est ajoutée goutte à goutte sous vive agitation à une solution aqueuse mixte d'acide oxalique $H_2C_2O_4$ et de chlorure de titanyle $TiOCl_2$ à une température de l'intervalle de 20 à 60°C et le précipité est calciné à une température de l'intervalle de 900 à 1300°C.

2. Procédé suivant la revendication 1, caractérisé en ce qu'on utilise une solution de chlorure de titanyle $TiOCl_2$ contenant 0,668 mole de Ti, qui est préparée par addition goutte à goutte sous agitation de 400 ml de $TiCl_4$ à une température ≤ 30°C à 600 ml d'eau, puis par dilution de la solution avec de l'eau jusqu'à 2000 ml.

3. Procédé suivant la revendication 1, caractérisé en ce qu'on dissout l'acide oxalique $H_2C_2O_4.2H_2O$ en une quantité de 185,27 g dans 1000 ml d'eau à une température de 55°C.

4. Procédé suivant la revendication 1, caractérisé en ce qu'on dissout le chlorure de baryum $BaCl_2.2H_2O$ en une quantité de 164,81 g dans 1600 ml d'eau.

5. Procédé suivant les revendications 2 et 3, caractérisé en ce qu'on ajoute la solution de chlorure de titanyle $TiOCl_2$ sous agitation à la solution d'acide oxalique $H_2C_2O_4$.

6. Procédé suivant les revendications 4 et 5, caractérisé en ce que la solution de chlorure de baryum $BaCl_2$ est ajoutée goutte à goutte sous vive agitation à la solution aqueuse mixte de chlorure de titanyle $TiOCl_2$ et d'acide oxalique à une température de 55°C, de façon qu'un précipité de titanyloxalate de baryum contenant un excès de $TiO_2$ de l'intervalle de 1,5 à 2,5 moles % se forme.

7. Procédé suivant la revendication 6, caractérisé en ce que le précipité de titanyloxalate de baryum, après avoir été débarrassé par lavage des ions Cl restants, est séché à l'air pendant une durée de 20 heures à une température de 50°C pour former une poudre.

8. Procédé suivant la revendication 7, caractérisé en ce que la poudre de titanyloxalate de baryum est décomposée thermiquement dans un four à moufle à une température de l'intervalle de 1000 à 1200°C, de préférence à une température de 1100°C, en atmosphère oxydante pour la formation de titanate de baryum $BaTiO_3$.

9. Utilisation du titanate de baryum $BaTiO_3$ préparé par le procédé suivant les revendications 1 à 8 pour la fabrication de composants électroniques passifs, en particulier de résistances ayant un coefficient de température positif de la résistance.

FIG.1

FIG.2